# EUROPEAN PATENT APPLICATION

(11) **EP 4 596 180 A1**
(43) Date of publication of application: **06.08.2025**
(21) Application number: 25152296.7
(22) Date of filing: 16.01.2025
(51) Int. Cl.: B25J 9/16

(54) **ROBOT SYSTEM**

(30) Priority: 30.01.2024 JP 2024011631
(71) Applicant: Nachi-Fujikoshi Corp., Tokyo 105-0021 (JP)
(72) Inventor: IMAOKA, Makoto, Toyama, 9803511 (JP); HAYASHI, Tetsuya, Toyama, 9308511 (JP); OOI, Yoshitaka, Toyama, 9308511 (JP)
(74) Representative: Plougmann Vingtoft a/s

(57) **Abstract**

The object of the present invention is to distinguish between a robot and an interfering object and to detect an approach of the interfering object.

A controller (4) of a robot system includes a link parameter storage part (62) for storing link parameter values of the robot, a point cloud data acquisition part (63) for acquiring point cloud data, which is a set of points indicating a position of a surface of an object placed in the space, from the three-dimensional sensor, a joint angle acquisition part (64) for acquiring a current joint angle of each joint of the robot arm, a robot model generator (65) for generating a robot model that shows posture that is similar to current posture of the robot based on the link parameter and the joint angle, an interfering object data setting part (66) for removing at least points indicating the robot from the point cloud data by using the robot model and setting the remaining point cloud data as interfering object data, which is a set of points indicating a position of an interfering object, and an approach determination part (67) for calculating a distance between the interfering object and the robot by using the interfering object data and the robot model and determining whether the interfering object is approaching the robot or not based on the distance between the interfering object and the robot.

## Description

### TECHNICAL FIELD

The present invention relates to a robot system that detects an approach of an interfering object such as a human.

### BACKGROUND OF THE INVENTION

In recent years, collaborative robots that work collaborating together with humans without safety fences have been attracting attention. Safety measures for the collaborative robots include a method in which the robot avoids danger when detecting a contact with an interfering object such as a human, and a method in which the robot avoids danger when detecting an approach of the interfering object. It can be said that the latter method is safer than the former method because the latter method gives an instruction of danger avoiding movement before contacting with the interfering object. As an example of the latter method, Patent Document 1 describes a system using a proximity sensor that detects proximity of an object based on a change in electrostatic capacitance generated between the object and the system.

### RELATED APPLICATIONS

[Patent Document 1] Japanese Patent Publication No. 7109562

### SUMMARY OF THE INVENTION

### (PROBLEMS TO BE SOLVED BY THE INVENTION)

However, the proximity sensor using the electrostatic capacitance method has an issue in that the sensor may detect external wires or an installation base etc. of the robot as interfering objects. Since a robot controller that controls the robot's movement memorizes in advance positions of the robot's accessories and parts and controls the robot so that a robot arm does not come into contact with the accessories and parts, the accessories and parts are not to be detected as interfering objects. If the robot's accessories and parts are detected as interfering objects, the robot may not be able to execute intended movement or its range of movement may be restricted, resulting in a significant drop in production efficiency.

The present invention was made in view of such matters. It is an object of the present invention to provide a robot system that distinguishes between a robot and an interfering object and detects an approach of the interfering object.

### (MEANS FOR SOLVING PROBLEMS)

To achieve the above object, an aspect of the present invention is a robot system including at least one robot having a robot arm, at least one three-dimensional sensor for taking images of a space including a movable range of the robot, and at least one controller for controlling movements of the robot and the three-dimensional sensor. The controller includes a link parameter storage part for storing values of link parameters of the robot, a point cloud data acquisition part for acquiring point cloud data, which is a set of points indicating a position of a surface of an object disposed in the space, from the three-dimensional sensor, a joint angle acquisition part for acquiring current joint angles of respective joints of the robot arm, a robot model generator for generating a robot model that shows posture that is similar to current posture of the robot based on the link parameters and the joint angles, an interfering object data setting part for removing at least points indicating the robot from the point cloud data by using the robot model and setting the remaining point cloud data as interfering object data, which is a set of points indicating a position of an interfering object, and an approach determination part for calculating a distance between the interfering object and the robot by using the interfering object data and the robot model and determining whether the interfering object is approaching the robot or not based on the distance between the interfering object and the robot.

The robot model generator may calculate points indicating positions of respective parts of the robot as reference points based on the link parameters and the joint angles and may generate the robot model based on the reference points.

Also, the robot model generator may use a spatial figure defined according to the reference points as a robot object, and the interfering object data setting part may remove at least points included in the robot object from the point cloud data to generate the interfering object data.

Also, the approach determination part may divide the interfering object data into groups and may calculate a distance between the interfering object and the robot for each of the groups.

Also, the approach determination part may calculate, as a distance between the interfering object and the robot, a distance between a spatial figure that is defined according to the points included in the interfering object data or to the interfering object data and a spatial figure that is defined according to the points included in the robot model or to the robot model.

### (EFFECTS OF THE INVENTION)

The present invention can provide a robot system that distinguishes between a robot and an interfering object and detects an approach of the interfering object.

### BRIEF DESCRIPTION OF DRAWINGS

FIG. 1 is a view illustrating an overview of a robot system according to an embodiment of the present invention.
FIG. 2 is a block diagram showing a configuration of a controller in FIG. 1.
FIG. 3 is a flow chart showing an example of a flow of a process realized by the controllers in FIG. 1.
FIG. 4 is a schematic view illustrating an example of a robot model.
FIG. 5 is a schematic view illustrating a process by an interfering object data setting part.
FIG. 6 is a schematic view illustrating a process by an approach determination part.

### DETAILED DESCRIPTION

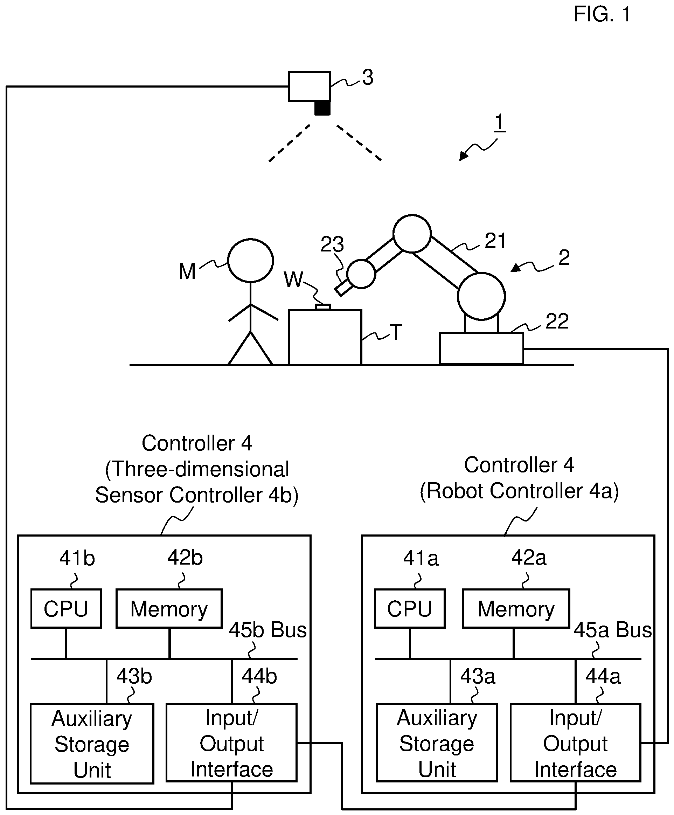

Hereinafter, some embodiments of the present invention will be described with reference to the accompanying drawings. FIG. 1 is a view illustrating an overview of a robot system according to an embodiment of the present invention. As shown in FIG. 1, a robot system 1 includes at least one robot 2 having a robot arm 21, at least one three-dimensional sensor 3 that takes images of a space including a movable range of the robot 2, and at least one controller 4 that controls movements of the robot 2 and the three-dimensional sensor 3. In the space in which images are taken by the three-dimensional sensor 3, a work W or a table T may be disposed. Also, the robot 2 is a collaborative robot, and a person M may exist in the space in which images are taken by the three-dimensional sensor 3.

The robot 2 includes an installation base 22 that supports the robot arm 21, and an end effector 23 is attached to an end of the robot arm 21. The robot arm 21 is configured by a link mechanism having a plurality of links, and the robot arm 21 includes joints that join the links with each other. Each joint is provided with a drive motor of which illustration is omitted. An example of the robot 2 is a vertical articulated robot with six joints. However, the present invention can be applied to robots with five joints or less, or with seven joints or more, or even to horizontal articulated robots, etc. Also, the robot 2 is not limited to a single-armed robot and may be a double-armed robot.

The three-dimensional sensor 3 is a sensor that can measure a three-dimensional position of an object and generates point cloud data, which is a set of points indicating positions of detected points on a surface of the object disposed in the space to be imaged. Unlimited examples of the three-dimensional sensor 3 include an active stereo camera, a passive stereo camera, a three-dimensional light detection and ranging (LiDAR) sensor, and a time of flight (ToF) camera. The point cloud data generated by the three-dimensional sensor 3 is orthogonal coordinates point cloud data represented in three-dimensional orthogonal coordinates (x, y, z). A possible range of each component of the three-dimensional coordinates (x, y, z) depends on an angle of view or a detection distance range of the three-dimensional sensor 3. Unlimited examples of file formats of the point cloud data include Point Cloud Data (PCD) files developed by Point Cloud Library (PCL), which is an open source library.

The three-dimensional sensor 3 may be installed on a ceiling and may take images from an upper part of the robot 2, or may be installed on a wall or on a tripod etc. and may take images from a horizontal direction of the robot 2. Also, the three-dimensional sensor 3 may be installed on the robot arm 21 or the end effector 23 etc. and may take images so that only a part of the robot 2 is included in an imaging range. Furthermore, if there is a range that cannot be imaged with the one three-dimensional sensor 3 (such as a part behind the robot 2), a plurality of the three-dimensional sensors 3 may be installed and the point cloud data obtained from the plurality of the three-dimensional sensors 3 may be synthesized.

The controller 4 includes a robot controller 4a for controlling movements of the robot 2 and a three-dimensional sensor controller 4b for controlling movements of the three-dimensional sensor 3. The robot controller 4a may be built into the installation base 22 of the robot 2, or may be installed outside the robot 2. In the latter case, the robot 2 and the robot controller 4a are communicatively connected to each other via a communication cable or wirelessly. Similarly, the three-dimensional sensor controller 4b may be integrated with or separated from the three-dimensional sensor 3. In the latter case, the three-dimensional sensor 3 and the three-dimensional sensor controller 4b are communicatively connected to each other via a communication cable or wirelessly. Also, the robot controller 4a and the three-dimensional sensor controller 4b are communicatively connected to each other via a communication cable or wirelessly.

A central processing unit (CPU) 41a, a memory 42a, an auxiliary storage unit 43a, and an input/output interface 44a of the robot controller 4a are connected to each other via a bus 45a. The CPU 41a reads out a control program stored in advance in the auxiliary storage unit 43a or the like to the memory 42a and executes a plurality of commands in order. The auxiliary storage unit 43a is a hard disk drive, a solid state drive, or the like, and stores data that is to be used in processes below. The input/output interface 44a inputs signals from the robot 2, the three-dimensional sensor controller 4b, and other devices etc., and outputs signals thereto.

A central processing unit (CPU) 41b, a memory 42b, an auxiliary storage unit 43b, and an input/output interface 44b of the three-dimensional sensor controller 4b are connected to each other via a bus 45b. The CPU 41b reads out a control program stored in advance in the auxiliary storage unit 43b or the like to the memory 42b and executes a plurality of commands in order. The auxiliary storage unit 43b is a hard disk drive, a solid state drive, or the like, and stores data that is to be used in processes below. The input/output interface 44b inputs signals from the three-dimensional sensor 3, the robot controller 4a, and other devices etc., and outputs signals thereto.

Although two of the controller 4, that is, the robot controller 4a and the three-dimensional sensor controller 4b, are illustrated in FIG. 1, the number of the controller 4 may be one or may be three or more. In the descriptions hereafter, the robot system 1 includes two of the controllers 4, which are the robot controller 4a and the three-dimensional sensor controller 4b, and such the controllers 4 cooperate with each other to execute processes.

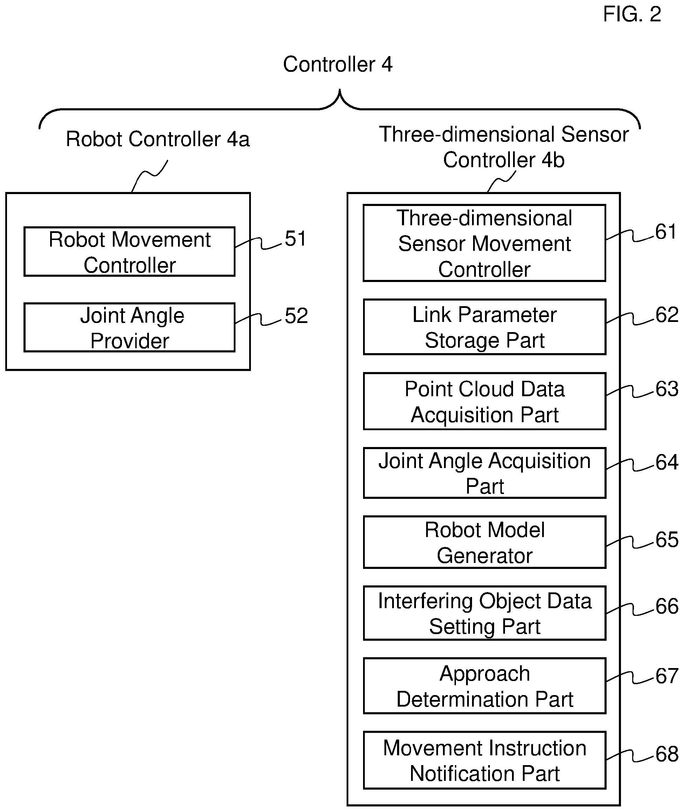

FIG. 2 is a block diagram showing a configuration of the controllers in FIG. 1. Collaboration between software, such as the control programs, and hardware resources, such as the CPU 41a and the CPU 41b, allows the robot controller 4a and the three-dimensional sensor controller 4b to include the configuration in FIG. 2.

The robot controller 4a includes a robot movement controller 51 and a joint angle provider 52. The robot movement controller 51 controls rotation and suspension of the drive motor of the robot arm 21 in accordance with instructions etc. from the control programs or external devices. The joint angle provider 52 provides to the three-dimensional sensor controller 4b a current j oint angle of each j oint of the robot arm 21 in a current state of the robot 2.

The three-dimensional sensor controller 4b includes a three-dimensional sensor movement controller 61, a link parameter storage part 62, a point cloud data acquisition part 63, a joint angle acquisition part 64, a robot model generator 65, an interfering object data setting part 66, an approach determination part 67, and a movement instruction notification part 68. The three-dimensional sensor movement controller 61 controls movements of the three-dimensional sensor 3 in accordance with instructions from the control programs or the external devices. The link parameter storage part 62 stores values of link parameters of the robot 2.

The link parameters are parameters that define geometrical position relation between links and joints of the robot arm 21. For example, for notation of the link parameters, Denavit - Hartenberg convention (D-H convention) is known. The link parameters using D-H convention may also be called D-H parameters. An overview of the link parameters using D-H convention is as follows:
1. The links and joints are given numbers in order of proximity to the base of the robot 2.
2. A coordinate system (x [i], y [i], z [i]) with z [i] axis as a joint axis i is set to a link i.
3. The x [i] axis is a common normal of the z [i] axis and a z [i+1] axis, and a direction toward the z [i+1] axis is to be positive.
4. The y [i] axis is set so as to be a right-handed coordinate system.
5. The link parameters are the following four parameters:
   (1) angle between the links θ [i] = angle from the x [i-1] axis to the x [i] axis around the z [i] axis;
   (2) distance between the links d [i] = distance from the x [i-1] axis to the x [i] axis along the z [i] axis;
   (3) link twist angle α [i] = angle from the z [i-1] axis to the z [i] axis around the x [i-1] axis;
   (4) link length a [i] = distance from the z [i-1] axis to the z [i] axis along the x [i-1] axis.

The angle between the links θ [i] is the current joint angle of each joint of the robot arm 21 provided by the joint angle provider 52 of the robot controller 4a. The link parameter storage part 62 stores in advance, apart from the angle between the links θ [i], three designed values for the distance between the links d [i], the link twist angle α [i], and the link length a [i].

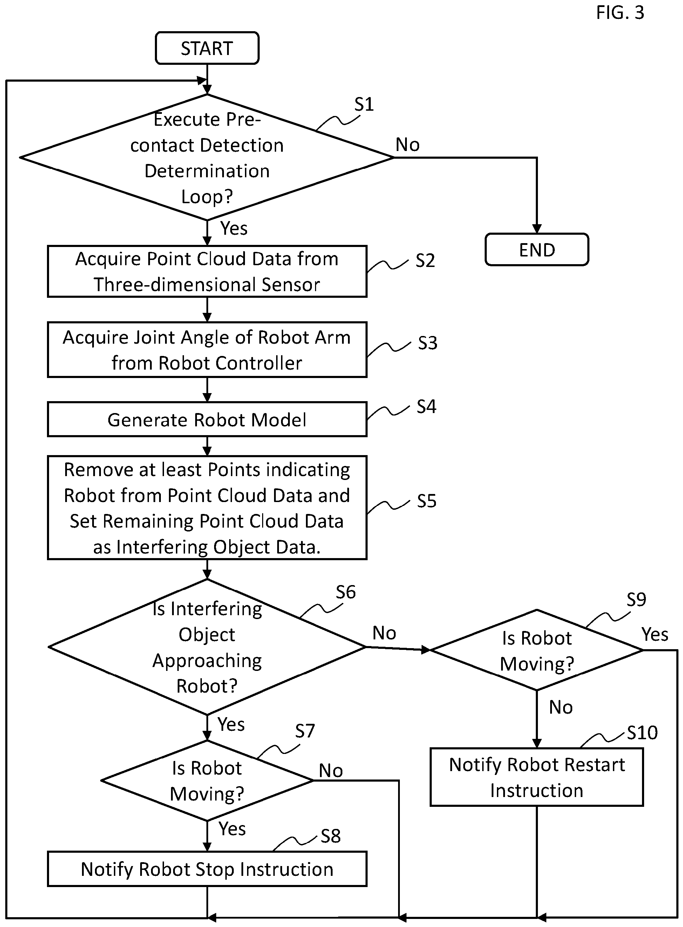

The point cloud data acquisition part 63 acquires, from the three-dimensional sensor 3, point cloud data that is a set of points indicating a position of a surface of an object disposed in the space imaged by the three-dimensional sensor 3. The joint angle acquisition part 64 acquires from the robot movement controller 51 the current joint angle of each joint of the robot arm 21. The robot model generator 65 generates a robot model that shows posture that is similar to current posture of the robot 2 based on the link parameters and the joint angles. The interfering object data setting part 66 removes at least the points indicating the robot from the point cloud data by using the robot model, and then sets the remaining point cloud data as interfering object data, which is a set of the points indicating a position of the interfering object. The approach determination part 67 calculates a distance between the interfering object and the robot by using the interfering object data and the robot model, and determines based on the distance between the interfering object and the robot whether the interfering object is approaching the robot or not. The movement instruction notification part 68 notifies movement instructions to the robot controller 4a based on a result of determination by the approach determination part 67. Such configurations will be described in detail below with reference to FIG. 3 - FIG. 6.

FIG. 3 is a flow chart showing an example of a flow of processes realized by the controllers in FIG. 1. As shown in FIG. 3, the three-dimensional sensor controller 4b checks whether to execute a pre-contact detection determination loop or not (a step S1). The pre-contact detection determination loop iterates a determination process, i.e. processes from a step S2 to a step S10, for detecting an approach of the interfering object before the robot 2 comes into contact with the interfering object.

On the one hand, when a command to stop the pre-contact detection determination loop is not received from the robot controller 4a, the three-dimensional sensor controller 4b executes the pre-contact detection determination loop (the step S1: YES). On the other hand, when the command to stop the pre-contact detection determination loop is received from the robot controller 4a, the three-dimensional sensor controller 4b terminates execution of the pre-contact detection determination loop (the step S1: NO). In a case of a movement mode such as a direct teaching in which a person is to be in direct contact with the robot 2, the robot controller 4a sends to the three-dimensional sensor controller 4b the command to stop the pre-contact detection determination loop.

Once in the pre-contact detection determination loop, the point cloud data acquisition part 63 of the three-dimensional sensor controller 4b acquires point cloud data from the three-dimensional sensor 3 (the step S2). As mentioned above, the point cloud data is represented by three-dimensional orthogonal coordinates (x, y, z). The point cloud data includes points indicating positions of surfaces of objects such as the robot 2, the work W, the table T, and the person M.

Next, the joint angle acquisition part 64 of the three-dimensional sensor controller 4b acquires from the j oint angle provider 52 of the robot controller 4a the current joint angle of each joint of the robot arm 21 (a step S3). For example, the joint angle provider 52 of the robot controller 4a sends to the three-dimensional sensor controller 4b the joint angle detected by an encoder installed on the drive motor at each joint.

Next, the robot model generator 65 of the three-dimensional sensor controller 4b generates a robot model based on the link parameters stored in the link parameter storage part 62 and the joint angles acquired by the joint angle acquisition part 64 (a step S4). Three values of the link parameters stored in the link parameter storage part 62 are the distance between the links di, the link twist angle αᵢ, and the link length aᵢ. Also, the joint angles acquired by the joint angle acquisition part 64 are used as values for the angle between the links θᵢ, which is one of the link parameters. The robot model generator 65 executes a forward kinematics calculation using the four values of the link parameters, analytically calculates points indicating positions of the parts of the robot 2 (all the joints, the end effector 23, etc.) to be reference points. Then, based on the reference points, the robot model generator 65 generates a robot model that shows a current state of the robot 2. In this way, the robot model generator 65 can generate the robot model quickly with sufficient accuracy for the approach determination between the robot 2 and the interfering object. This can make the robot system 1 detect an approach of the interfering object to the robot 2 in time for danger avoiding movement.

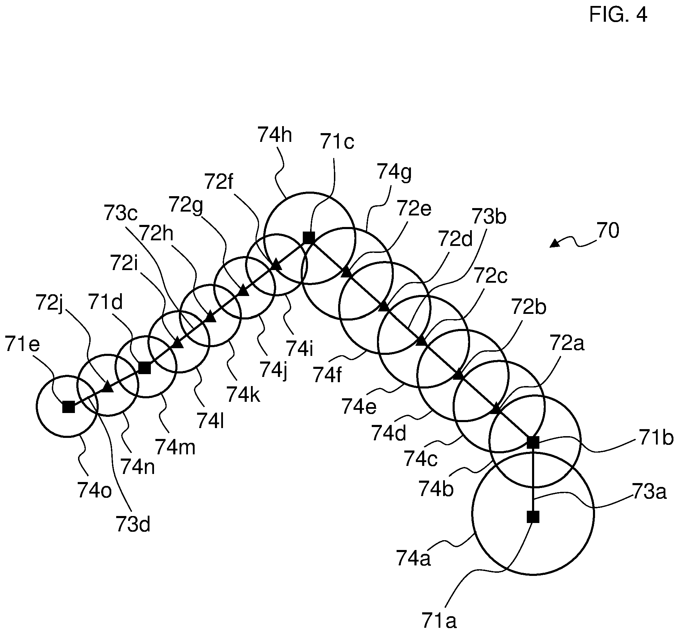

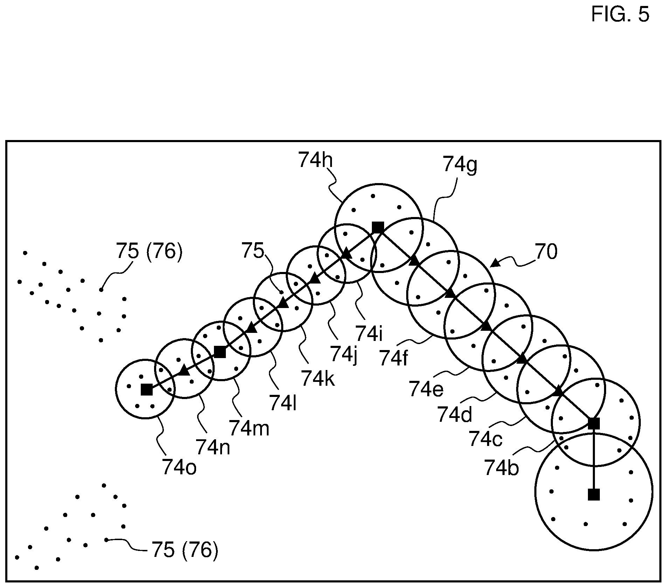

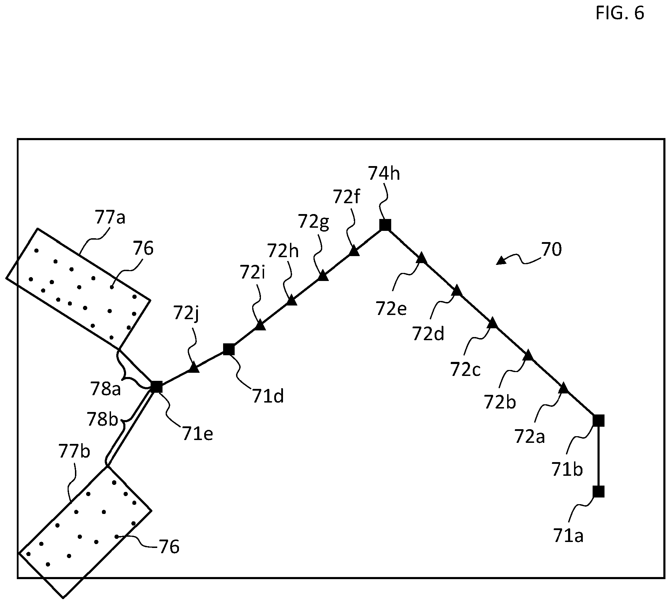

FIG. 4 is a schematic view illustrating an example of the robot model. A robot model 70 is a model approximating the robot 2 and is generated in a three-dimensional orthogonal coordinates space. However, in FIG. 4, the robot model 70 is illustrated being simplified as a two-dimensional orthogonal coordinates plain that is viewed from a particular direction in the three-dimensional orthogonal coordinates space. The same applies to FIG. 5 and FIG. 6 below.

Points 71a - 71e represented by squares in the drawing are reference points indicating positions of the joints, the end effector 23, etc. calculated by the robot model generator 65. Although there are five of the reference points in the example in FIG. 4, the number of the reference points is not particularly limited. Also, points 72a - 72j represented by triangles in the drawing are linear interpolating points generated in accordance with linear segments 73a - 73d that connect the adjacent two points of the reference points 71a - 71e. The number of the linear interpolation points may differ for each of the linear segments 73a - 73d. In the example in FIG. 4, the number of the linear interpolation points for the linear segment 73a is zero, the number of linear interpolation points for the linear segment 73b is five, the number of linear interpolation points for the linear segment 73c is four, and the number of linear interpolation points for the linear segment 73d is one. The number of the linear interpolation points is not limited to the example in FIG. 4 and can be appropriately changed according to the size etc. of the robot 2. Also, the robot model generator 65 may generate the robot model 70 using only the reference points, without generating the linear interpolation points.

The robot model generator 65 sets a spatial figure defined according to the reference points as a robot object. The robot object is one or a plurality of virtual figures approximating the robot 2. The robot objects shown in FIG. 4 are spheres 74a - 74o having predetermined radii with the reference points 71a - 71e and the linear interpolation points 72a - 72j, which are generated according to the reference points 71a - 71e, as center points. The radii of the spheres 74a - 74o may differ from one another according to the size of each part such as the robot arm 21 and the end effector 23.

The robot objects are not limited to the spheres 74a - 74o shown in FIG. 4. The robot objects may be in any shape that can approximate the robot 2 so as to include parts other than the robot arm 21, such as accessories like external wiring and the installation base 22. For example, the robot objects may be a plurality of cubic bodies with the reference points 71a - 71e and the linear interpolation points 72a - 72j as center points. Also, for example, the robot objects may be a plurality of cylindrical columns or rectangular parallelepipeds with the linear segments 73a - 73d generated according to the reference points 71a - 71e as central axes.

Returning to the description of FIG. 3, the interfering object data setting part 66 of the three-dimensional sensor controller 4b removes at least points indicating the robot 2 from the point cloud data acquired by the point cloud data acquisition part 63. Here, the points indicating the robot 2 include the points indicating the robot arm 21, the installation base 22, the end effector 23, the accessories of the robot 2, and so on. Then, the interfering object data setting part 66 sets the unremoved remaining point cloud data as the interfering object data (a step S5). In this way, the three-dimensional sensor controller 4b can divide the points included in the point cloud data into the points indicating the robot and the points indicating the interfering object. That is, the three-dimensional sensor controller 4b can distinguish between the robot 2 and the interfering obj ect.

FIG. 5 is a schematic view illustrating a process by the interfering object data setting part. In FIG. 5, the robot model 70 and point cloud data 75 are shown overlapping with each other. The interfering object data setting part 66 removes from the point cloud data 75 at least the points included in the robot objects (i.e., the spheres 74a - 74o) and sets the unremoved remaining point cloud data 75 as interfering object data 76. In this way, the interfering object data setting part 66 can quickly distinguish between the robot 2 and the interfering object with sufficient accuracy for the approach determination between the robot 2 and the interfering object. This can make the robot system 1 detect an approach of the interfering object to the robot 2 in time for danger avoiding movement.

Here, instead of removing only the points indicating the robot 2 from the point cloud data 75, the interfering object data setting part 66 may also remove points indicating, in addition to the robot 2, objects that are not to be recognized as the interfering objects. The objects that are not to be recognized as the interfering objects other than the robot 2 include, for example, the work Wand the table T. For example, in a case of a tool in which the end effector 23 holds the work W, contact between the end effector 23 and the work W is to be allowed and thus the work W is not to be recognized as the interfering object. Also, for example, when the table T is a stationary object with a position thereof being known in advance, the robot controller 4a controls the movement of the robot 2 restricting the movable range thereof so that the robot arm 21 does not come into contact with the table T. In such the case, the table T is not to be recognized as the interfering object. For example, the interfering object data setting part 66 may memorize an environment map including position information of the work W and the table T in advance, and, similarly to the points indicating the robot 2, may remove the points indicating the work Wand the table T from the point cloud data 75.

Returning to the description of FIG. 3, the approach determination part 67 of the three-dimensional sensor controller 4b calculates the distance between the interfering object and the robot 2 by using the interfering object data 76 and the robot model 70, and determines whether the interfering object is approaching the robot 2 or not based on the distance between the interfering object and the robot 2 (a step S6).

FIG. 6 is a schematic view illustrating a process by the approach determination part. In FIG. 6, the robot model 70 and the interfering object data 76 are shown overlapping with each other. The number of the interfering object may not be one, and a plurality of interfering objects may approach the robot 2 from different directions. So, the approach determination part 67 divides the interfering object data 76 into groups and calculates the distance between the robot 2 and the interfering object for each of the groups. In this way, the approach determination part 67 can quickly and accurately determine the approach between the interfering object and the robot 2. This can make the robot system 1 detect an approach of the interfering object to the robot 2 in time for danger avoiding movement.

Since the interfering object data 76 is point cloud data, dividing the interfering object data 76 into groups means dividing the point cloud data into groups. The approach determination part 67 applies to the interfering object data 76 a clustering method of Point Cloud Library (PCL), which is an open source software library, (i.e., a method using Euclidean Cluster Extraction class), for example, for the grouping. The clustering method can divide the unorganized point cloud data into smaller parts.

Also, the approach determination part 67 applies to each grouped interfering object data 76 a PCL shape approximation method (i.e., a method using Moment Of Inertia Estimation class) to generate a bounding box as a spatial figure including the interfering object. The bounding box is a rectangular parallelepiped including the given point cloud data. The spatial figure approximating the interfering object is not limited to the bounding box (the rectangular parallelepiped) and may be any other spatial figure such as a sphere or a cylindrical column.

Then, the approach determination part 67 calculates Euclidean distances between the bounding box and the reference points or the linear interpolating points. Since there are pluralities of the reference points and the linear interpolating points, the approach determination part 67 calculates Euclidean distances between the bounding box and the respective points, and the minimum value (a value of the shortest distance) is taken as a distance between the interfering object and the robot 2. The example in FIG. 6 shows a bounding box 77a and a bounding box 77b each including a part of the interfering object data 76. For example, the bounding box 77a is a left arm of a person, and the bounding box 77b is a right arm of the person. A distance 78a is a distance between the bounding box 77a and the reference point 71e and a distance 78b is a distance between the bounding box 77b and the reference point 71e, and the distance 78a and the distance 78b are the minimum distance values among the pluralities of the reference points or the linear interpolating points. The approach determination part 67 determines that the interfering object is approaching the robot 2 when the distance between at least one interfering object of the grouped interfering object data 76 and the robot 2 is equal to or less than a threshold value. In the example in FIG. 6, when at least one of the distances 78a and 78b is equal to or less than the threshold value, the approach determination part 67 determines that the interfering object is approaching the robot 2.

Although the approach determination part 67 determines whether or not the interfering object is approaching the robot 2 based on the distance between the interfering object and the robot 2 in the above description, the determination may be further made based on a relative speed between the interfering object and the robot 2. For example, the approach determination part 67 can calculate the relative speed between the interfering object and the robot 2 by finding a relative displacement of positions of the interfering object and the robot 2 from the previous acquisition of the point cloud data until the current acquisition of the point cloud data and dividing the relative displacement by the time between previous acquisition of the point cloud data and the current acquisition of the point cloud data. Then, for example, in regard to the threshold value of the distance between the interfering object and the robot 2, the approach determination part 67 uses a value that is proportional to the relative speed between the interfering object and the robot 2. In this way, even if the speed of the interfering object approaching the robot 2 is fast, a danger avoiding instruction can be notified in time to avoid danger.

Also, although in the above description the approach determination part 67 calculates the distances between the spatial figure approximating the interfering object and the points indicating the position of the robot 2 (the reference points or the interpolating points) as the distance between the interfering object and the robot 2, any other calculation methods may be used. For example, the approach determination part 67 may calculate a distance between the spatial figure approximating the interfering object and a spatial figure approximating the robot 2 (the robot object). Also, for example, the approach determination part 67 may calculate distances between the points included in the interfering object data 76 and the spatial figure approximating the robot 2. Alternatively, for example, the approach determination part 67 may calculate distances between the points included in the interfering object data 76 and the points indicating the position of the robot 2. In summary, the approach determination part 67 calculates, as the distance between the interfering object and the robot 2, the distances between the points included in the interfering object data 76 or the spatial figures defined according to the interfering object data and the points included in the robot model 70 or the spatial figures defined according to the robot model 70.

Returning to the description of FIG. 3, if the approach determination part 67 determines that the interfering object is approaching the robot 2 (the step S6: YES), the movement instruction notification part 68 of the three-dimensional sensor controller 4b checks whether the robot 2 is moving or not (a step S7). It the robot 2 is moving (the step S7: YES), the movement instruction notification part 68 notifies the robot controller 4a an instruction to stop the robot 2 as the danger avoiding instruction and returns to the step S1 (a step S8). If the robot 2 is not moving (the step S7: NO), the movement instruction notification part 68 does nothing and returns to the step S1 (a step S10).

On the other hand, if the approach determination part 67 determines that the interfering object is not approaching the robot 2 (the step S6: NO), the movement instruction notification part 68 checks whether the robot 2 is moving or not (a step S9). If the robot 2 is moving (the step S9: YES), the movement instruction notification part 68 does nothing and returns to the step S1. If the robot 2 is not moving (the step S9: NO), the movement instruction notification part 68 notifies the robot controller 4a an instruction to restart moving the robot 2 as a restriction relaxation instruction and returns to the step S1 (the step S10).

The danger avoiding instruction notified in the step S8 is not limited to the stop instruction and may be a deceleration instruction or a route-changing instruction along a contact-avoidance route, etc., for example. Similarly, the restriction relaxation instruction notified in the step S10 is not limited to the instruction to restart moving and may be an acceleration instruction or a route-changing instruction along the shortest route, etc., for example.

As described above, the robot system 1 according to the embodiments of the present invention can distinguish between the robot 2 and the interfering object and detect an approach of the interfering object. Since the three-dimensional sensor 3 is used in the robot system 1 according to the embodiments of the present invention, by appropriately setting the installation location of the three-dimensional sensor 3 and a position relation between the robot 2 and the three-dimensional sensor 3, the robot system 1 can detect the approach of the interfering object in a wide range. Also, the robot system 1 according to the embodiment of the present invention is applicable regardless of the shape and size of the robot 2, and thus there is no need to change the hardware configuration for each model of the robot 2, thereby facilitating introduction of the system.

Also, in the case of the conventional proximity sensor using the electrostatic capacitance method, a distance in which changes in electrostatic capacitance can be detected is short and it might not be possible to take action to avoid danger in time after detecting the approach of the interfering object. On the other hand, instead of the proximity sensor using the electrostatic capacitance method, the robot system 1 according to the embodiments of the present invention uses the three-dimensional sensor 3 that can detect an approach of the interfering object in the wide range, and thus an approach of the interfering object can be detected in time for danger avoiding movement.

Also, in the case of the conventional proximity sensor using the electrostatic capacitance method, detection of the interfering object may become unstable if water droplets are on the detection surface or humidity changes. On the other hand, the robot system 1 according to the embodiments of the present invention uses the three-dimensional sensor 3 that is not affected by environmental changes such as humidity, and thus an approach of the interfering object can be detected stably regardless of the environmental changes.

Although the preferred embodiments of the robot system and the like according to the present invention have been described referring to the attached drawings, the technical scope of the present invention is not limited to the embodiments described above. It is obvious that persons skilled in the art can think out various examples of changes or modifications within the scope of the technical idea disclosed in the claims, and it will be understood that they naturally belong to the technical scope of the present invention.

### (DESCRIPTION OF NOTATIONS)

- 1: robot system
- 2: robot
- 3: three-dimensional sensor
- 4: controller
- 4a: robot controller
- 4b: three-dimensional sensor controller
- 21: robot arm
- 22: installation base
- 23: end effector
- 51: robot movement controller
- 52: joint angle provider
- 61: three-dimensional sensor movement controller
- 62: link parameter storage part
- 63: point cloud data acquisition part
- 64: joint angle acquisition part
- 65: robot model generator
- 66: interfering object data setting part
- 67: approach determination part
- 68: movement instruction notification part
- 70: robot model
- 71a - 71e: reference point
- 72a - 72j: linear interpolating point
- 73a - 73d: linear segment
- 74a - 74o: sphere (robot object)
- 75: point cloud data
- 76: interfering object data
- 77a, 77b: bounding box
- 78a, 78b: distance

## Claims

1. A robot system comprising:
at least one robot having a robot arm;
at least one three-dimensional sensor for taking images of a space including a movable range of the robot; and
at least one controller for controlling movements of the robot and the three-dimensional sensor,
the controller comprising:
a link parameter storage part for storing values of link parameters of the robot;
a point cloud data acquisition part for acquiring point cloud data, which is a set of points indicating a position of a surface of an object disposed in the space, from the three-dimensional sensor;
a joint angle acquisition part for acquiring current joint angles of respective joints of the robot arm;
a robot model generator for generating a robot model that shows posture that is similar to current posture of the robot based on the link parameters and the joint angles;
an interfering object data setting part for removing at least points indicating the robot from the point cloud data by using the robot model and setting the remaining point cloud data as interfering object data, which is a set of points indicating a position of an interfering object; and
an approach determination part for calculating a distance between the interfering object and the robot by using the interfering object data and the robot model and determining whether the interfering object is approaching the robot or not based on the distance between the interfering object and the robot.

2. The robot system according to claim 1, wherein
the robot model generator calculates points indicating positions of respective parts of the robot as reference points based on the link parameters and the joint angles, and generates the robot model based on the reference points.

3. The robot system according to claim 2, wherein
the robot model generator uses a spatial figure defined according to the reference points as a robot object; and
the interfering object data setting part removes at least points included in the robot object from the point cloud data to generate the interfering object data.

4. The robot system according to claim 1, wherein
the approach determination part divides the interfering object data into groups and calculates a distance between the interfering object and the robot for each of the groups.

5. The robot system according to any one of claims 1 to 4, wherein
the approach determination part calculates, as a distance between the interfering object and the robot, a distance between a spatial figure that is defined according to the points included in the interfering object data or to the interfering object data and a spatial figure that is defined according to the points included in the robot model or to the robot model.
